# EUROPEAN PATENT APPLICATION

(11) **EP 3 333 547 A1**
(43) Date of publication of application: **13.06.2018**
(21) Application number: 17203833.3
(22) Date of filing: 27.11.2017
(51) Int. Cl.: G01C 21/36, G06K 9/00

(54) **METHOD TO ACCESS THE INFORMATION ON PUBLIC PLACES OF A CITY OR GRAPHICAL WORKS IN THE CITY**

(30) Priority: 09.12.2016 CH 16272016
(71) Applicant: Di Girolamo, Matteo, 4102 Binningen (CH)
(72) Inventor: Di Girolamo, Matteo, 4102 Binningen (CH)
(74) Representative: Zardi, Marco

(57) **Abstract**

Method to access the information on the public places of a city is described, the method comprising the steps of:
- photographing a public place (100) or a graphical work (1) in the public place using a portable electronic device (2), preferably a smartphone, and sending a corresponding picture (3) to a server (4), said picture being sent to the server by means of an application (5) installed on the portable electronic device in the form of a request for a review (6) of the public place or the graphical work and being stored in a database (7) of the server;
- including in the request for a review (6) related information (8), said related information not being able to be read or directly understood from the picture of the public place or from the graphical work photographed and comprising at least an indication of a location (91, 92, 93) situated in the vicinity of the public place (100);
- the related information (8) being able to be retrieved by taking again a picture (33) of the public place or the graphical work (1) by means of a portable electronic device (22) and sending the newly taken picture (33) of the public place (10) or the graphical work (1) to the server by means of the application, in the form of a request to receive related information (10) about the public place or the graphical work.

## Description

### Field of application

The present invention relates to a method to access the information on public places of a city or graphical works in the city.

In particular, the present invention relates to a method of the aforementioned type, in which the user of a portable electronic device is guided along a route through a city where there are places of public interest characterized by graphical works.

The present invention also relates to a permanent-memory application for a portable electronic device suitable for implementing the method of the aforementioned type, said application being integrated in a navigation module, preferably a GPS, of the electronic device.

### Prior art

Various methods for accessing information about public places and graphical works are known. For example, the audio guide system of a museum uses portable electronic devices which can be activated when in the vicinity of a work of art, for example a painting, by selecting a numerical key identifying the work of art. In the more recent audio guide systems the portable electronic devices are used in combination with radiofrequency tokens which are mounted on the work of art. When the device is situated in the vicinity of the token, it receives a code for accessing a part of the audio guide corresponding to the work of art.

Although convenient and in fact widely used, these access methods are unsuitable for use in an urban environment, namely outside of a museum or predetermined private area, where all the works have been reviewed and the guides duly updated.

In an urban environment in fact various places of interest for a user may be situated in different areas which are not necessarily associated with a private body and therefore may be difficult to review using an audio guide system of the aforementioned type. Moreover, the interest of many users, especially that of younger persons, may also change rapidly and not remain statically fixed on the same places. This occurs when new recreational or night-time premises are opened or the users themselves decide to set up new meeting places where they can perform activities together, such as skateboarding or parkour.

In all these cases, an audio guide managed and maintained in a centralized manner, for example within a communal urban structure, is unable to satisfy the needs of the users. Moreover, on some occasions, young persons prefer to share information about new places where they can meet up, without necessarily having to make it publicly known.

The technical problem forming the basis of the present invention is that of providing a method for accessing information about the public places of a city or graphical works in the city which can be duly updated and may be easily accessed at any location in the city and where the information may be shared between users who are interested in a specific activity and a tour route through the city created such that it can be personalized depending on the specific interest of the user and easily changed following the creation of new places of interest, said method being able to overcome the drawbacks and limitations hitherto associated with the currently known methods for accessing information on public places.

### Summary of the invention

The idea forming the basis of the present invention is that of obtaining information from a photograph taken at a place of interest or of a work of art. In particular, the idea is that of providing an application for a smartphone which is able to retrieve information from the picture of the location or the work of art, this information not being able to be directly obtained from the location or the work of art and being suitable for creating a tour route through the city or for identifying other places of interest for the user.

On the basis of this proposed solution the technical problem is solved by a method to access the information on the public places of a city, the method comprising the steps of:
- photographing a public place or a graphical work in the public place using a portable electronic device, preferably a smartphone, and sending a corresponding picture to a server, the picture being sent to the server by means of an application installed on a portable electronic device in the form of a request for a review of the public place or the graphical work and being stored in a database of the server;
- including in the request for a review related information which cannot be read or directly understood from the picture of the public place or from the graphical work photographed and comprising at least an indication of a location situated in the vicinity of the public place;
- the related information being able to be retrieved by taking again a picture of the public place or the graphical work by means of a portable electronic device and sending the newly taken picture of the public place or the graphical work to the server by means of the application, in the form of a request to receive related information about the public place or the graphical work.

In a preferred mode of implementation, the application comprises a registration form for the user, and the step of requesting a review and the step of receiving information are performed by means of portable electronic devices where the users are registered in the application.

Preferably, the server performs a comparison between the picture received in the form of a request to receive related information about the public place or graphical work and the pictures stored in the database, identifies a picture, from among the stored pictures, which corresponds to the picture received in the form of a request to receive related information, and extracts the related information associated with the picture which has been identified.

According to one aspect of the present invention, the related information comprises an explanation of a part of the graphical work or the public place which cannot be understood from the picture.

The graphical work is for example a graffiti or wall painting and the part which cannot be understood is a graphic or letter symbol of the graffiti.

The database stores the locations associated with at least one of said graphic or letter symbols.

Advantageously, the application indicates a route which connects the locations associated with the same graphic or letter symbol.

Preferably, all the locations along the route are associated with a graffiti or wall painting.

Even more preferably, the route is determined by the application depending on the response provided by the user of the electronic device to one of a number of predetermined questions for selecting a route, which are posed by the application.

In one embodiment of the invention, the application is integrated in a navigation module, preferably a GPS, of the portable electronic device, and the application guides the user to a location along the route by means of the navigation module.

Further characteristic features and advantages of the method for accessing information according to the invention will emerge from the description, provided hereinbelow, of a non-limiting example of embodiment thereof with reference to the accompanying drawings.

### Brief description of the drawings

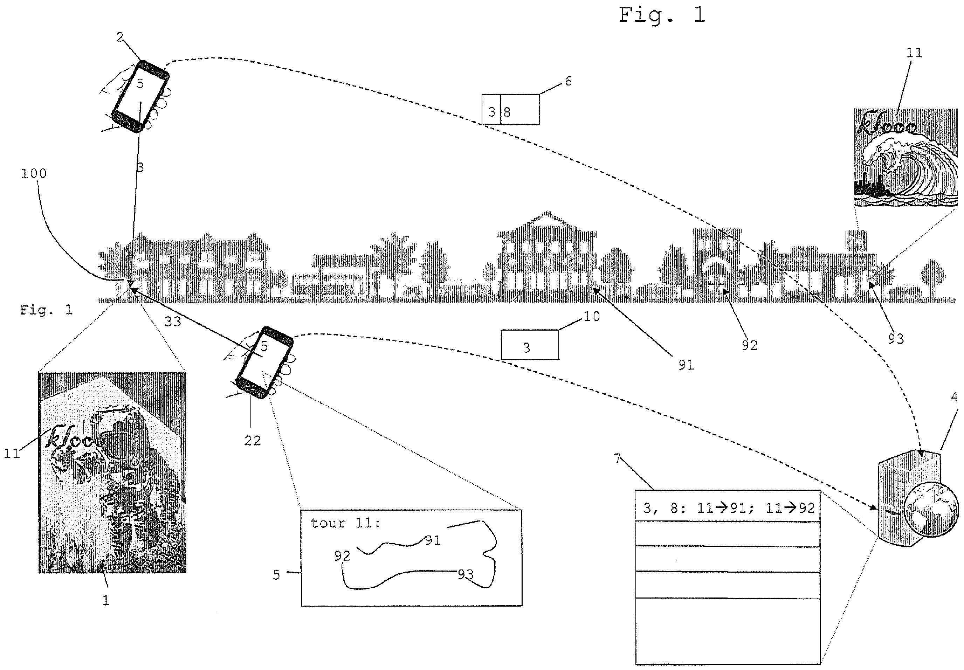

Figure 1 is a schematic diagram illustrating the method to access information on the public places of a city or graphical works in the city, according to the present invention.

### Detailed description

With reference to Figure 1 this shows in schematic form, in the background, an area in a city where there are public premises, cars and public transport, service and leisure facilities, a petrol station, etc.

A graphical work, in the form of a wall painting, is present in a location 100 of the city and shown on a larger scale in the detail 11. This graphical work, according to the invention, is used to access information about other public places or graphical works in the city.

In particular, a user who is in the location 100, equipped with a portable electronic device 2, takes a photograph of the wall painting 11. The photograph 3 is preferably taken using an application 5 of the smartphone designed to implement the method according to the present invention. Alternatively, the photograph 5 is taken using a photographic program of the smartphone and then acquired by the application 5. The terms "electronic device" or "smartphone" are used interchangeably in the present invention since any portable electronic device having a link with the Internet and able to execute the application 5 may be used to access the information according to the method of the present invention.

The application 5 has a function, preferably associated with a graphic symbol, designed to send the picture 3 to a server 4. The server 4 is associated with the application 5, for example during installation on the smartphone 2. The application is associated with an identification code or name and can be obtained from a distribution centre accessible via Internet, for example using the download function of the smartphone applications.

The transmission of the picture 3 to the server 4 in the ways indicated constitutes a request for a review 6 of the public place 100 or the graphical work 11 and is stored in a database 7 of the server 4 which comprises a plurality of other pictures sent by the user or by other users, in the form of a request for a review 6.

According to the present invention the request for a review 6 contains related information 8 which cannot be directly read or understood from the picture 3 of the public place 100 or from the graphical work 11 which has been photographed.

This related information 8 comprises at least an indication of a location 91, 92, 93 situated close to the public place 100, as schematically shown in Figure 1, preferably a location in which urban graphical works may be found. In particular, the related information may be inserted in the request for a review 6 by the user who took the photograph 3, using a text editor available in the application 5. In one embodiment of the invention, the user takes a photograph of a wall painting in the vicinity of the public place 100 and sends it as a picture 3 in the request for a review 6, together with related information 8 comprising an indication of the localities 91, 92, 93 where other wall paintings, for example by the same artist or "writer", may be found. In the related information it is possible to indicate a code or identification name of the writer, such as his/her name in code form or an identifying graphical image.

It is possible that some public places associated with the wall paintings may be very dangerous, for example because they are close to stations or railway, road or motorway transit points. In order to prevent users of the application from being exposed to dangerous situations, the related information also includes an indication of the danger level of the public place and any warnings as to the absolute ban on visiting a given public place.

The application 5 also includes a function for retrieving the information stored by the user.

In particular, the related information 8 may be retrieved by taking again a picture 33 of the public place or the graphical work 1 by means of a portable electronic device 22 and sending the newly taken picture 33 of the public place 100 or the graphical work 1 to the server 4 by means of the application 5, in the form of a request to receive related information 10 about the public place or the graphical work.

With reference to Figure 1, the picture 33 of the public place or the graphical work 1 is taken by means of a smartphone 22 of another user of the application who is in the public place 100. The picture 33 is sent to the server 4 which compares it with the other pictures stored in the database, identifies the picture 3 already reviewed and sends back to the user of the smartphone 22 the related information, such as the information about the public places 91, 92, 93 of the city in which other wall paintings are located.

Still with reference to the identification of the related information, the Applicant has envisaged a step for comparing the picture received 33 from the server 4 in the form of a request to receive related information 10 about the public place or the graphical work with the pictures stored in the database 7, and a step for identifying a picture 3, from among the stored pictures, which corresponds to the picture 33 received in the form of a request to receive related information 10. The related information is associated with the identified picture, extracted and sent to the user who sent the picture 33 to the server.

The Applicant has envisaged that the application 5 comprises a form for registration and/or providing a profile of the users and that the step of requesting a review 6 and the step of receiving information 10 are performed by means of portable electronic devices where the users are preferably registered and/or have profiles in the application. Each user may register him/herself in the application 5, indicating various personal details, including a unique identification nickname.

According to one aspect of the present invention, a user may register him/herself as an artist or "writer" in order to be able to send to the server 4 the photographs 3 of the place 100 or the graphical work 11, thus contributing to a real-time review of the artistic state of the urban walls.

Further types of user, other than "writers", may be classified during registration and/or profile compilation, including for example the category "Visitor" which allows access to an interactive game where it is possible to visit the locations stored in the database of the server 4, in the ways described below, in the present application.

According to one aspect of the present invention it is also envisaged that the number of users of the application are counted, for example via means for identifying the electronic devices of the users of the application 5 (such as the IMEI codes of the smartphones) and storing and counting the IMEI codes. It is also envisaged that, for a predefined maximum number of users, there may be free access to the interactive game: for example, for up to 400,000 users, the application 5 may be used without prior subscription, while, if there are more than 400,000 users, the application may be used only following subscription.

The registered users can be traced, preferably via a search bar in the application 4 where the name or nickname of a user can be keyed in or entered, the user identified and a chat started if necessary.

In one embodiment of the present invention the related information 8 comprises an explanation of a part of the graphical work 11 or the public place which cannot be understood from the picture 3, 33. For example, wall paintings situated in different parts of the city may comprise a graphic symbol or a graphically identical (or similar) part which encodes a piece of information, such as the presence of a night-time premises of a certain type in the vicinity or a meeting place or location for carrying out a group activity, such as skateboarding, etc. Said information may be obtained by the user only by sending the picture 3 to the server 4.

In other words, the graphical works 1 may be graffiti or a wall painting and the part 11 which cannot be understood may be a graphic or letter symbol of the graffiti, by means of which only the various users of the applications are able to share information. The database of the server may store the locations 91, 92, 93 associated with at least one of said graphic or letter symbols which cannot be understood.

In other words, the method and the application according to the present invention comprise a method for encoding and decoding information, encoding comprising the steps of realizing a graphical work such as a wall painting, associating information with at least one part of the wall painting and sending it to the server, and decoding comprising the steps of photographing again the graphical work in order to retrieve the information which is graphically encoded therein.

According to one aspect of the present invention the application signals a route which connects the locations 91, 92, 93 associated with a same graphic or letter symbol. For example, without limiting the scope of protection of the present invention, a predetermined graphic symbol may be integrated in several wall paintings situated in the vicinity of same type of public or leisure premises, and the application retrieves the information relating to various public or leisure premises by means of the graphic symbols and the information associated with them in the database of the server 4.

According to another aspect of the present invention, the route may be determined by the application 5 depending on the response provided by the user of the electronic device to one of a number of predetermined questions posed by the application for selecting a route.

For example, the application 5 may list n different types of public premises or m leisure locations, and the user selects one of said types of public or leisure locations and sends the picture 33 together with this selected information. In this case, the server 4 determines, from among the pictures stored, the picture 3 corresponding to the picture 33 and returns to the user of the application 5 the related information about only the locations 91, 92 where public or leisure premises of the type selected can be found.

Preferably the application is integrated in a navigation module of the portable electronic device, for example a GPS, and the application guides the user to a location along the route by means of the navigation module.

Advantageously, according to the method of the present invention, the graphical works and/or public places of a city which are not particularly known or publicized may be made available to the users of a smartphone application. The method for accessing the information about these graphical works and/or the public places is simplified since it originates from the photograph of a place or work which is already of interest and is associated with several other graphical works or places of the same type or origin. The method incorporates a step of encoding and decoding the information which avoids the publication of related information alongside the graphical work, this information instead being stored in a server accessible via the Internet using a smartphone.

## Claims

1. Method to access the information on the public places of a city, the method comprising the steps of:
- photographing a public place (100) or a graphical work (1) in the public place using a portable electronic device (2), preferably a smartphone, and sending a corresponding picture (3) to a server (4), said picture being sent to said server by means of an application (5) installed on said portable electronic device in the form of a request for a review (6) of the public place or the graphical work and being stored in a database (7) of said server;
- including in said request for a review (6) related information (8), said related information not being able to be read or directly understood from the picture of the public place or the graphical work photographed and comprising at least an indication of a location (91, 92, 93) situated in the vicinity of the public place (100) or the graphical work (1);
- said related information (8) being able to be retrieved by taking again a picture (33) of the public place or the graphical work (1) by means of a portable electronic device (22) and sending the newly taken picture (33) of the public place (10) or the graphical work (1) to said server by means of said application, in the form of a request to receive related information (10) about the public place or the graphical work.

2. Method according to claim 1, **characterized in that** said application comprises a registration form for a user, and said step of requesting a review (6) and said step of receiving information (10) are performed by means of portable electronic devices where the users are registered in the application.

3. Method according to claim 1, **characterized in that** said server performs a comparison between the picture (33) received in the form of a request to receive related information (10) about the public place or graphical work and the pictures (3, ...) stored in said database (7), identifies a picture (3), from among the stored pictures (3, ...), which corresponds to the picture (33) received in the form of a request to receive related information (10), and extracts the related information (8) associated with the picture which has been identified.

4. Method according to claim 3, **characterized in that** said related information (8) comprises the explanation of a part of the graphical work (11) or the public place which cannot be understood from the picture (3, 33).

5. Method according to claim 4, **characterized in that** said graphical work (1) is a graffiti or a wall painting and said part (11) which cannot be understood is a graphic or letter symbol of the graffiti.

6. Method according to claim 5, **characterized in that** said database stores said locations (91, 92, 93) in association with at least one of said graphic or letter symbols.

7. Method according to Claim 6, **characterized in that** said application signals a route which connects the locations (91, 92, 93) associated with the same graphic or letter symbol.

8. Method according to claim 7, **characterized in that** the locations (91, 92, 93) of said route are associated with a graffiti or a wall painting.

9. Method according to claim 7, **characterized in that** said route is determined by the application depending on the response provided by the user of the electronic device to one of a number of predetermined questions for selecting a route, which are posed by the application.

10. Method according to claim 1, **characterized in that** said application is integrated in a navigation module, preferably a GPS, of the portable electronic device and the application guides the user to a location along the route by means of the navigation module.
